# EUROPEAN PATENT SPECIFICATION

(11) **EP 0 866 752 B1**
(45) Date of publication and mention of the grant of the patent: **15.03.2000**
(21) Application number: 96944701.0
(22) Date of filing: 27.12.1996
(51) Int. Cl.: B60N 2/06

(54) **LOCKING/GUIDING DEVICE**
VERRIEGELUNGS-UND FÜHRUNGSVORRICHTUNG
DISPOSITIF DE VERROUILLAGE ET DE GUIDAGE

(30) Priority: 03.01.1996 NO 960020
(43) Date of publication of application: 30.09.1998
(73) Proprietor: NORSK HYDRO ASA, 0240 Oslo (NO)
(72) Inventor: CLAUSEN, Edvin, List, DK-6270 Tonder (DK)
(74) Representative: Patentanwälte Leinweber & Zimmermann
(86) International application number: NO9600313
(87) International publication number: WO9725220

(56) References cited:
- WO-A-95/02520
- DE-C- 3 909 320
- US-A- 4 533 107
- US-A- 5 192 045
- US-A- 5 447 352

## Description

The present invention relates to vehicle seat structures, and more particularly to a locking/guiding device in such structures, allowing for longitudinal adjustment of vehicle seats.

Customarily such vehicle seat structures (frame, rail system and accessories) are made of steel components which means, in the case of seat rails, bearing structure, fastening/locking devices etc. based on steel sheets of appropriate thickness being cut, bent, welded into a functional configuration. The obvious drawback, besides high cost manufacturing comprising several operations, is the fact that dimensioning of the components is based on the expected load on the most exposed parts and thus the whole component is consequently overdimensioned and thus too heavy.

Due to a general present tendency to reduce the overall vehicle weight some of the components, e.g. the seat rails, are already provided as extrusions of light metals, e.g. aluminium alloys, after redesign necessitated by differences inherent in the materials and the applied manufacturing process(es).

It is an object of the present invention to provide a novel locking/guiding device for longitudinal adjustment of the vehicle seats, having a simplified configuration integrating several fastening/guiding and supporting functions as well.

Another object of the invention is to provide a low weight locking device offering an optimal load distribution within the structural configuration of the device.

DE 39 09 320 C2 discloses a locking/guiding device for longitudinal adjustment of a vehicle seat rail fastened to a vehicle floor structure. Said device comprises a central load distributing part provided with fastening means on one side and two substantially parallel legs extending from the opposite side and meant for transfer of load and accommodation of fastening and supporting structural members of the device. Said two substantially parallel legs have identical wall thicknesses.

According to the present invention, the above objects are achieved by a locking/guiding device according to claim 1. Preferred embodiments are claimed in the subclaims.

The invention will be readily understood and apparent from the following description of preferred embodiments and mode of operation of the device as illustrated in the attached drawings, Figs. 1-5, where:
- Fig. 1: is a schematic principal perspective view of a vehicle seat attachment to the vehicle body,
- Fig. 2: illustrates schematically in a perspective view the locking/guiding device provided with complementary parts,
- Fig. 3: shows in a partially broken perspective view another embodiment of a fastening arrangement,
- Fig. 4: shows in a perspective view another variant of the fastening arrangement, and finally
- Fig. 5: is still another simplified variant of the fastening arrangement.

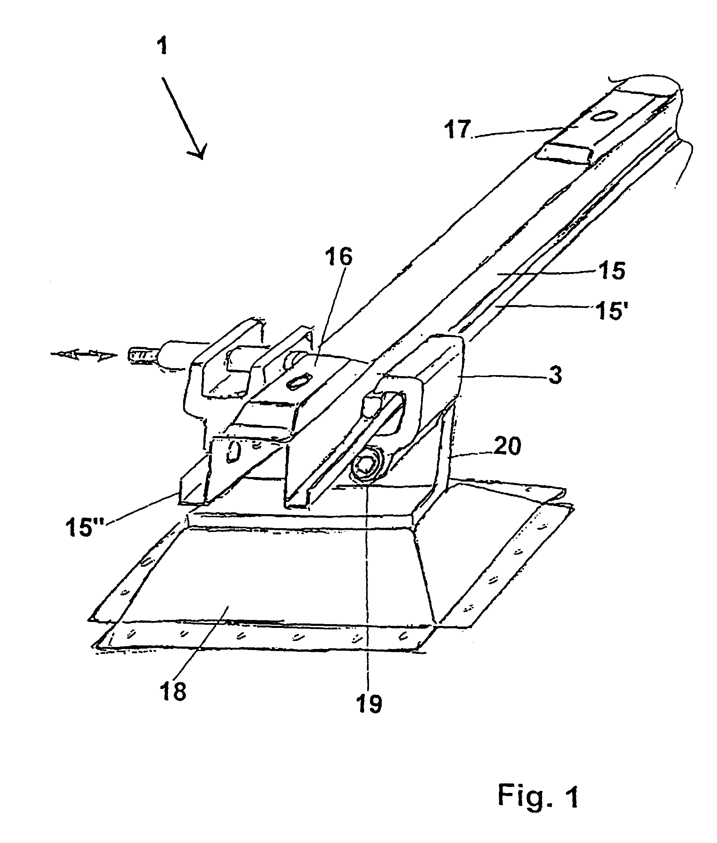

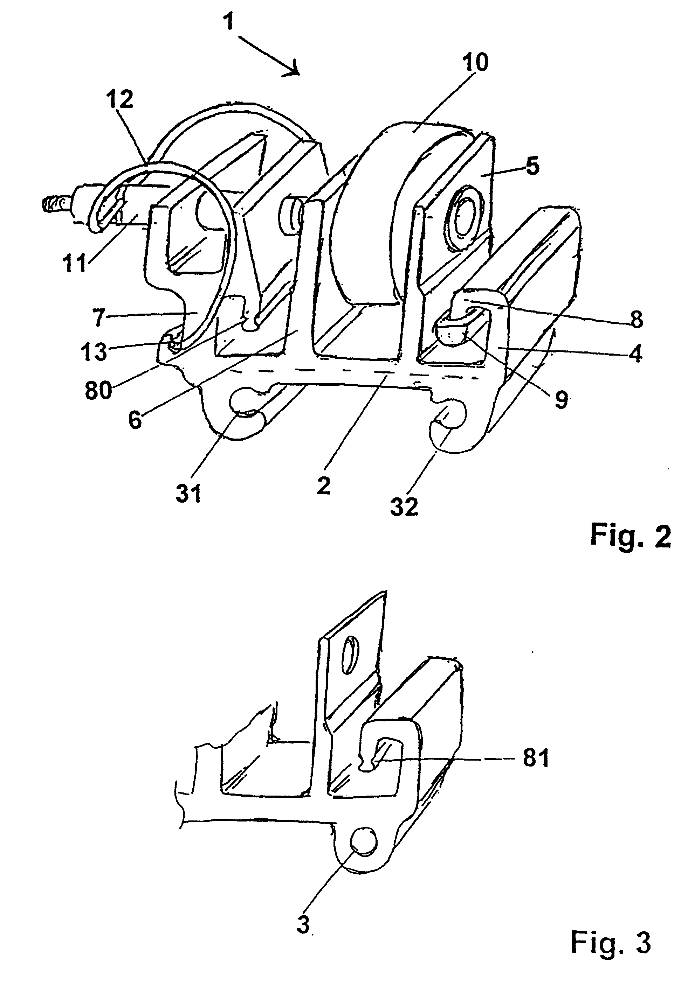

Referring to Figure 1, illustrating schematically in a perspective view the locking/guiding device 1 being fastened to the vehicle bottom structure 18, the fastening means comprises, by way of example, a fastening bracket 20 and a pair of longitudinally extending bolts/screws 19 accommodated by correspondingly, longitudinally extending slots (apertures) provided in the locking/guiding device 1. The combined locking/guiding function of the device 1, being of a complementary configuration adapted to provide supporting and guiding means for the bearing rail 15 provided with attachment means 16,17 for a car seat (not shown in the Figure), will be more apparent from Figure 2.

Figure 2 shows in a cross-sectional perspective view the locking/guiding arrangement comprising the locking device 1 completed by a roller 10 anchored between two side legs 5,6 parallel extending from a load distributing base plate 2 and locked by means of perpendicularly extending combined bearing axle/locking pin 11 under remote control by spring means 12 advantageously situated in a retention groove 13 provided in the base plate 2.

Two outwardly positioned, laterally extending legs 4,7 are provided for longitudinal/axial engagement of the seat rail 15 (not shown in the Figure) by means of downward oriented flanges 8,8' extending parallel with the seat rail 15, terminated by specially configurated enlarged/retracted parts ensuring fixation of sliding shoes 9. The flanges 8,8' ensure a reliable gliding contact with the seat rail 15 being complementary shaped to "grasp" around the corresponding seat rail flanges 15',15".

An apparent advantage offered by extruding the load bearing/distributing plate 2 in one integral piece is the possibility of individual dimensioning of different parts according to the expected load/function of the part. Thus the main body of base plate 2 serving as a load distributing element of the device is adequately dimensioned and provided with an appropriate wall thickness, while the remaining parts, e.g. the laterally extending legs 4,5,6,7, are individually dimensioned, e.g. the leg 5 having thinner wall thickness compared to leg 6 bearing most of the load in connection with locking of the roller 10 (seat rail frame 15).

Figure 3 shows in a fractional (broken) perspective view a different configuration of the fastening grooves 3, in this case extruded as encapsulated apertures (holes) provided in the base plate 2. Furthermore, the special configuration (fastening details) of the flange(s) 8 ensuring fixation of the sliding shoes described in connection with Figure 2 (not shown) can be seen more clearly in Figure 3.

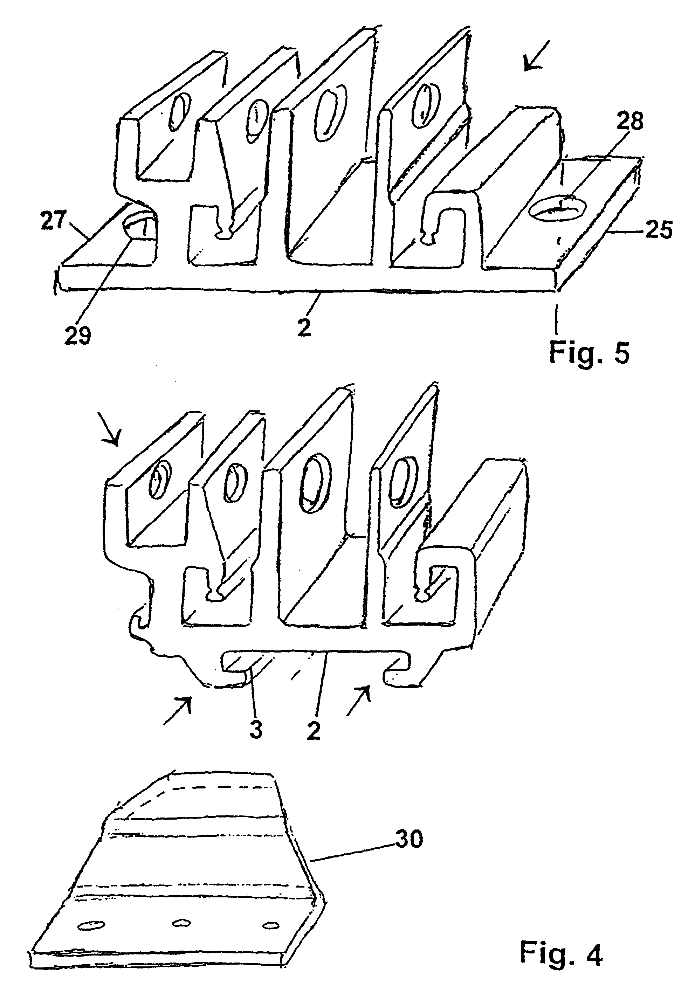

Figure 4 illustrates another embodiment of the fastening arrangement (device) for fastening of the device 1 to the vehicle floor (not shown in the Figure). A special fastening bracket 30 attached to the vehicle floor is threaded into the central load distributing plate 2, the plate being provided with a pair of "rails" facing each other.

Still another embodiment of the fastening arrangement is displayed in Figure 5, showing the load distributing plate 2 provided with a pair of flanges 25,27 extending outwardly of the laterally protruding legs 4,7.

The flanges are provided with apertures 28,29 for easy fastening by means of bolts, screws etc. (not shown in the Figure) to the vehicle floor.

## Claims

1. Locking/guiding device (1) for longitudinal adjustment of a vehicle seat rail (15) fastened to a vehicle floor structure (18), wherein
the locking/guiding device (1) comprises a central load distributing part, such as a plate (2) provided as an integral one piece extrusion with fastening means (3) on one side, and several substantially parallel legs (4, 5, 6, 7) extending from the opposite side of the central plate (2) providing for transfer of load and accommodation of fastening and supporting structural members (10, 11) of the device (1), and wherein
the centrally located pair of legs (5, 6) accommodate a roller (10) supporting the vehicle seat frame, said legs exhibiting different wall thickness adjusted to the actual exposed load.

2. Device according to claim 1,
characterized in that
the two outwardly situated legs (4, 7) engage the seat rail (15) flanges (15', 15") and are further provided with longitudinally extending grooves (80, 81) for clips fastening of gliding members (9) ensuring contact between the seat rail (15) and the device (1).

3. Device according to claim 1 or 2,
characterized in that
the locking/guiding device is provided with a guiding groove (13) accommodating a spring wire (12) for remote control of locking/releasing of the roller (10).

4. Device according to one or more preceding claims,
characterized in that
the fastening means (3) have a configuration of longitudinally extending grooves (31, 32) accommodating screws, bolts or the like fastened to the floor structure (18).

5. Device according to any preceding claim,
characterized in that
the integrally provided locking/guiding device (1) is extruded in one piece of an aluminium alloy.

## Patentansprüche

1. Verriegelungs-/Führungsvorrichtung (1) zur Längseinstellung einer an einer Fahrzeugbodenstruktur (18) befestigten Fahrzeugsitzschiene (15), wobei
die Verriegelungs-/Führungsvorrichtung (1) aufweist ein zentrales Lastverteilungsteil, etwa eine als einstückiges Extrusionsteil mit einer Befestigungseinrichtung (3) an einer Seite vorgesehene Platte (2), und eine Mehrzahl im wesentlichen parallele Schenkel (4, 5, 6, 7), die sich von der entgegengesetzten Seite der zentralen Platte (2) aus erstrecken, eine Lastverteilung bewirken und zum Tragen von Befestigungs- und Haltestrukturelementen (10, 11) der Vorrichtung (1) dienen, und wobei
das zentral angeordnete Paar Schenkel (5, 6) eine den Fahrzeugsitzrahmen haltende Walze (10) trägt, wobei die Schenkel verschiedene auf die tatsächlich gegebene Last abgestimmte Wandstärken aufweisen.

2. Vorrichtung nach Anspruch 1, dadurch gekennzeichnet, daß die zwei außen angeordneten Schenkel (4, 7) mit den Flanschen (15', 15") der Sitzschiene (15) in Eingriff stehen und ferner mit sich in Längsrichtung erstreckenden Rillen (80, 81) für die Einklipsbefestigung von einen Kontakt zwischen der Sitzschiene (15) und der Vorrichtung (1) sicherstellenden Gleitelementen (9) versehen sind.

3. Vorrichtung nach Anspruch 1 oder 2, dadurch gekennzeichnet, daß die Verriegelungs-/Führungsvorrichtung versehen ist mit einer einen Federdraht (12) zur Fernbedienung der Verriegelung/Freigabe der Walze (10) haltenden Führungsrille (13).

4. Vorrichtung nach einem der vorstehenden Ansprüche, dadurch gekennzeichnet, daß die Befestigungseinrichtung (3) einen Aufbau mit sich in Längsrichtung erstreckenden Rillen (31, 32) aufweist, die mit der Bodenstruktur (18) verbundene Schrauben, Bolzen oder dergleichen halten.

5. Vorrichtung nach einem der vorstehenden Ansprüche, dadurch gekennzeichnet, daß die einstückig vorgesehene Verriegelungs/Führungsvorrichtung (1) als ein Stück aus einer Aluminiumlegierung extrudiert ist.

## Revendications

1. Dispositif de verrouillage/guidage (1) destiné à l'ajustement longitudinal d'un rail de siège de véhicule (15) fixé sur une structure de plancher de véhicule (18), dans lequel
le dispositif de verrouillage/guidage (1) comporte une partie centrale de répartition de charge, telle qu'une plaque (2) fournie sous la forme d'une extrusion en une seule pièce munie de moyens de fixation (3) sur un premier côté, et de plusieurs pattes sensiblement parallèles (4, 5, 6, 7) s'étendant à partir du côté opposé de la plaque centrale (2) fournissant le transfert de charge et la réception d'éléments structurels de fixation et de support (10, 11) du dispositif (1) et dans lequel
la paire de pattes positionnées centralement (5, 6) reçoit un rouleau (10) supportant le châssis de siège du véhicule, lesdites pattes présentant une épaisseur de paroi différente ajustée à la charge exposée réelle.

2. Dispositif selon la revendication 1,
caractérisé en ce que
les deux pattes situées vers l'extérieur (4, 7) viennent en prise avec les rebords (15', 15'') du rail de siège (15) et sont en outre munies de gorges s'étendant longitudinalement (80, 81) destinées à fixer des éléments de glissement (9) assurant le contact entre le rail de siège (15) et le dispositif (1).

3. Dispositif selon la revendication 1 ou 2, caractérisé en ce que
le dispositif de verrouillage/guidage est muni d'une gorge de guidage (13) recevant un fil de ressort (12) pour la commande à distance de la libération du rouleau (10).

4. Dispositif selon l'une quelconque des revendications précédentes, caractérisé en ce que
les moyens de fixation (3) ont une configuration de gorges s'étendant longitudinalement (31, 32) recevant des vis, des boulons ou analogues fixés sur la structure de plancher (18).

5. Dispositif selon l'une quelconque des revendications précédentes, caractérisé en ce que
le dispositif de verrouillage/guidage fourni en une seule pièce (1) est extrudé en une pièce d'alliage d'aluminium.
